# EUROPÄISCHE PATENTSCHRIFT

(11) **EP 4 269 892 B1**
(45) Veröffentlichungstag und Bekanntmachung des Hinweises auf die Patenterteilung: **04.06.2025**
(21) Anmeldenummer: 22188385.3
(22) Anmeldetag: 02.08.2022
(51) Int. Cl.: G01N 17/00, G01M 3/22, F25B 1/00, F24F 11/36

(54) **PRÜFKAMMER UND VERFAHREN**
TEST CHAMBER AND METHOD
CHAMBRE D'ESSAI ET PROCÉDÉ

(30) Priorität: 28.04.2022 DE 102022110340
(43) Veröffentlichungstag der Anmeldung: 01.11.2023
(73) Patentinhaber: Weiss Technik GmbH, 35447 Reiskirchen (DE)
(72) Erfinder: Zahrt, Yannik, 35466 Rabenau (DE); Diehl, Felix, 35321 Laubach (DE)
(74) Vertreter: advotec.

(56) Entgegenhaltungen:
- EP-A2- 2 317 254
- CN-A- 109 459 532
- CN-U- 207 067 364

## Beschreibung

Die Erfindung betrifft ein Verfahren und eine Prüfkammer zur Konditionierung von Luft, insbesondere Temperierkammer, Klimakammer oder dergleichen, wobei die Prüfkammer einen gegenüber einer Umgebung verschließbaren und temperaturisolierten Prüfraum zur Aufnahme von Prüfgut, und eine Temperiervorrichtung zur Temperierung des Prüfraums umfasst, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei die Prüfkammer mit einem vom Prüfraum räumlich abgetrennten Maschinenraum ausgebildet ist, wobei der Kühlkreislauf mit dem Verdichter zumindest teilweise in dem Maschinenraum angeordnet ist.

Derartige Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -50 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. Eine derartige Prüfkammer ist aus der EP 0 344 397 A2 bekannt.

Das in einem Kühlkreislauf eingesetzte Kältemittel sollte ein relatives geringes CO2-Äquivalent aufweisen, d.h. ein relatives Treibhauspotenzial oder auch Global Warming Potential (GWP) sollte möglichst gering sein, um eine indirekte Schädigung der Umwelt durch das Kältemittel bei Freisetzung zu vermeiden. Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder fluorierten Stoffe als Kältemittel eingesetzt werden, weshalb natürliche Kältemittel, beispielsweise Kohlenstoffdioxid (CO2) in Frage kommen. Nachteilig bei derartigen Kältemitteln mit geringen GWP ist, dass diese Kältemittel in den für einen Kühlkreislauf relevanten Temperaturbereichen eine teilweise deutlich verringerte Kälteleistung im Vergleich zu Kältemitteln mit vergleichsweise größeren GWP aufweisen. Es ist zwar auch bekannt, Kohlenwasserstoffe als Kältemittel zu verwenden, hier ist jedoch nachteilig, dass Kohlenwasserstoffe leicht brennbar sind. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm DN 2 bzw. der DIN 378 Klassen A2, A2L und A3 in der zuletzt am Prioritätstag gültigen Fassung fällt. Wird ein brennbares Kältemittel verwendet, ist unter anderem eine Befüllung, ein Versand und ein Betrieb eines Kühlkreislaufs bzw. einer Prüfkammer aufgrund der einzuhaltenden Sicherheitsvorschriften erschwert. Ein wesentliches Problem ist eine mögliche Leckage des Kühlkreislaufs innerhalb des Prüfraums, in dem sich elektrische Widerstandsheizungen und auch elektrisch betriebene Geräte, als Prüfgut, befinden können. Im Falle einer Leckage kann es daher zu einer Explosion kommen.

Um sich die Vorteile brennbarer Kältemittel gegenüber nicht brennbarer Kältemittel nutzbar zu machen, ist es jedoch erforderlich, eine mögliche Explosion in dem Prüfraum im Falle einer Leckage zu verhindern. Dies könnte, wie auch bei anderen vergleichbaren Anlagen, mittels einer Lüftungsanlage ermöglicht werden, mit der austretendes Kältemittel aus dem Prüfraum abgesaugt werden könnte. Dafür muss die Lüftungsanlage jedoch für einen Einsatz in einem explosionsgefährdeten Bereich geeignet sein. Unter einer derartigen Eignung werden Geräte und Schutzsysteme verstanden, welche den ATEX-Richtlinien der Europäischen Union, insbesondere der ATEX-Produktrichtlinie 2014/34/EU und/oder der ATEX-Betriebsrichtlinie 1999/92/EG in der am Prioritätstag gültigen Fassung entsprechen. Hier besteht jedoch das Problem, dass in dem Prüfraum je nach Prüfzyklus Temperaturen von -50 °C bis +180 °C vorherrschen können, jedoch ATEX-konforme Lüfter, die für eine entsprechende Lüftungsanlage erforderlich wären, nicht für eine Nutzung bei diesen Temperaturen geeignet sind. Ein eigens für diese Nutzung ausgebildeter Lüfter wäre hingegen aufgrund der geringen Stückzahl bei einer Herstellung, einer Entwicklung und einer erforderlichen ATEX-Zertifizierung nicht wirtschaftlich einsetzbar.

Aus der CN 207 067 364 U ist eine Prüfkammer bzw. Temperier- oder Klimakammer mit einem Prüfraum bekannt. Zur Überwachung einer Prüfraumatmosphäre ist ein Kanal mit einer Temperierschlange, einem Gassensor und einer Saugpumpe an dem Prüfraum angeschlossen. Über die Saugpumpe wird beständig Luft aus dem Prüfraum zu dem Gassensor gefördert, welcher bei einem Auftreten von Brandgasen oder dergleichen ein Abschalten einer Stromversorgung des Prüflings und einem Betrieb des Lüfters initiiert.

Die EP 2 317 254 A2 beschreibt eine Kälteanlage bei der bis auf einen Verdampfer alle übrigen Komponenten eines Kühlkreislaufs in einem Maschinenraum angeordnet sind. Die Kälteanlage wird mit einem Kohlenwasserstoff als Kältemittel betrieben, wobei in dem Maschinenraum ein Gassensor angeordnet ist, der im Falle einer Leckage innerhalb der Einhausung eine Lüftungsanlage in Gang setzt.

Der vorliegenden Erfindung liegt daher die Aufgabe zugrunde, eine Prüfkammer und ein Verfahren zur Konditionierung von Luft mittels einer Prüfkammer vorzuschlagen, mit der bzw. dem eine Absaugung einer Prüfraumatmosphäre unter Explosionsschutz-Bedingungen mit einfachen Mitteln möglich ist.

Diese Aufgabe wird durch eine Prüfkammer mit den Merkmalen des Anspruchs 1 oder 6 sowie ein Verfahren mit den Merkmalen des Anspruchs 18 oder 20 gelöst.

Die erfindungsgemäße Prüfkammer zur Konditionierung von Luft, insbesondere Temperierkammer, Klimakammer oder dergleichen, umfasst einen gegenüber einer Umgebung verschließbaren und temperaturisolierten Prüfraum zur Aufnahme von Prüfgut, und eine Temperiervorrichtung zur Temperierung des Prüfraums, mittels der eine Temperatur in einem Temperaturbereich von -50 °C bis +180 °C innerhalb des Prüfraums ausbildbar ist, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum ausgebildet ist, wobei der Kühlkreislauf mit dem Verdichter zumindest teilweise in dem Maschinenraum angeordnet ist, wobei die Prüfkammer eine Lüftungsanlage mit einer Detektoreinrichtung mit zumindest einem Gassensor in oder an dem Prüfraum zur Detektion von Kältemittel in dem Prüfraum umfasst, wobei die Lüftungsanlage einen Lüfter und einen Abluftkanal umfasst, wobei der Abluftkanal an den Prüfraum angeschlossen ist, derart, dass mittels des Lüfters Luft aus dem Prüfraum in den Abluftkanal förderbar ist, wobei der Lüfter einen Lüftermotor und ein Lüfterrad umfasst, wobei der Lüftermotor in einer luftdichten Einhausung angeordnet ist.

Mit der erfindungsgemäßen Prüfkammer ist es möglich als Kältemittel ein Kohlenwasserstoff oder ein Kältemittelgemisch aus Kohlenwasserstoffen in dem Kühlkreislauf sicher zu verwenden und sich damit die Vorteile dieser Art von Kältemitteln nutzbar zu machen. Dabei werden im Rahmen eines Prüfablaufs auch höhere Temperaturen in dem Prüfraum ausgebildet, wobei dann auch eine Erwärmung der Luft des Prüfraums mittels der Heizeinrichtung erfolgt. Gleichzeitig wird so auch das in dem Wärmeübertrager enthaltene Kältemittel erwärmt, wodurch es zu einer Wärmeausdehnung des Kältemittels in dem Wärmeübertrager kommt. Im Falle einer Leckage, insbesondere des Wärmeübertragers in dem Prüfraum, kann es so leicht zu einem Austritt von Kältemittel in den Prüfraum kommen. Da sich in dem Prüfraum regelmäßig Luft befindet, kann sich folglich leicht eine Explosionsatmosphäre ausbilden, die z.B. in Verbindung mit einem möglicherweise in Betrieb stehenden elektrischen Widerstandsheizelement der Heizeinrichtung zu einer Explosion führen kann. Um dies zu verhindern ist eine Lüftungsanlage der Prüfkammer vorgesehen, die Luft aus dem Prüfraum absaugen kann. Die Lüftungsanlage umfasst die Detektoreinrichtung mit dem Gassensor zur Detektion von Kältemittel und/oder von in dem Kühlkreislauf verwendeten Kältemittel. Der Gassensor ist unmittelbar in dem Prüfraum angeordnet, an dem Prüfraum angeordnet, an den Prüfraum angeschlossen oder mit dem Prüfraum verbunden, derart dass bei einem Austritt von Kältemittel in dem Prüfraum dieses schnell detektiert werden kann. Weiter ist der Abluftkanal an den Prüfraum angeschlossen, so dass mittels des Lüfters die Luft aus dem Prüfraum in den Abluftkanal, und damit aus dem Prüfraum hinaus, gefördert werden kann. Dabei kann über eine eigens dafür vorgesehene Öffnung in dem Prüfraum, beispielsweise eine Druckausgleichsvorrichtung oder einen Zuluftkanal, Luft aus einer Umgebung in den Prüfraum nachströmen. Der Lüfter selbst ist aus einem Lüftermotor und einem Lüfterrad gebildet, wobei vorgesehen ist, dass der Lüftermotor in einer luftdichten Einhausung angeordnet ist. Dadurch wird es möglich auch Lüftermotoren zu verwenden die nicht ATEXkonform ausgebildet sind. Insgesamt kann so die Lüftungsanlage mit einfachen Mitteln für einen Einsatz unter Explosionsschutzbedingungen nutzbar gemacht werden.

Die Einhausung kann aus Metall oder Metallblech ausgebildet sein und den Lüftermotor zumindest gegenüber dem Abluftkanal, dem Prüfraum und/oder dem Maschinenraum luftdicht abtrennen. Folglich kann der Lüfter in dem Prüfraum oder im Maschinenraum angeordnet sein, wobei vorzugsweise der Lüfter in dem Maschinenraum angeordnet ist, da der Lüfter dann nicht den Prüfbedingungen im Prüfraum ausgesetzt ist. Auch kann so verhindert werden, dass eventuell in den Prüfraum austretendes Kältemittel an den Lüftermotor des Lüfters gelangen kann.

Eine Ablufttemperatur in dem Abluftkanal kann folglich in etwa der Temperatur innerhalb des Prüfraums entsprechen. Der Lüftermotor kann dann so ausgebildet sein, dass mit dem Lüfter auch beispielsweise +180 °C heiße Luft gefördert werden kann. Die luftdichte Einhausung des Lüftermotors ermöglicht eine Abschirmung des Lüftermotors gegenüber heißen Schwaden von in dem Abluftkanal geförderter Luft oder sich im Bereich des Lüftermotors befindlicher Luft. Eine Verwendung eines ATEX-zertifizierten Lüftermotors bzw. Lüfters wäre hier hingegen nicht möglich, da diese Geräte regelmäßig für eine Fördermedientemperatur von -20 °C bis +60 °C zertifiziert sind, was die im Prüfraum ausgebildete Temperatur im Temperaturbereich von -50 °C bis +180 °C nicht abdecken würde.

Der Abluftkanal kann mit einem ersten Kanalabschnitt an den Prüfraum und mit einem zweiten Kanalabschnitt an den Maschinenraum angeschlossen sein, wobei der Lüfter in dem ersten Kanalabschnitt angeordnet sein kann, wobei ein weiterer Lüfter der Lüftungsanlage in dem weiteren Kanalabschnitt angeordnet sein kann. So kann auch vorgesehen sein, dass mit einem weiteren Gassensor, der dann in dem Maschinenraum angeordnet ist, Kältemittel in dem Maschinenraum detektiert werden kann. In diesem Fall kann der weitere Lüfter dann Luft aus dem Maschinenraum absaugen. Hierzu kann der weitere Kanalabschnitt vorgesehen sein, in dem der weitere Lüfter dann angeordnet ist. Somit wird es möglich unabhängig voneinander aus dem Prüfraum oder dem Maschinenraum oder auch gleichzeitig aus dem Prüfraum und dem Maschinenraum im Falle einer Leckage Luft abzusaugen um die Bildung einer Explosionsumgebung zu verhindern.

Der erste Kanalabschnitt und der zweite Kanalabschnitt können in einem gemeinsamen Kanalabschnitt des Abluftkanals münden. Der gemeinsame Kanalabschnitt kann dann auch außerhalb der Prüfkammer bzw. eines Gehäuses der Prüfkammer oder des Maschinenraums verlaufen. Somit kann sichergestellt werden, dass keine unter Druck stehenden Abluftkanäle innerhalb des Maschinenraums angeordnet sind. Ein mögliches explosionsfähiges Gemisch von Luft und Kältemittel befindet sich dann in dem gemeinsamen Kanalabschnitt außerhalb der Prüfkammer.

Der weitere Lüfter kann für eine Verwendung in explosionsgefährdeten Bereichen, insbesondere entsprechend der ATEX-Produktrichtlinie und/oder der ATEX-Betriebsrichtlinie, ausgebildet sein. Da eine Lufttemperatur in dem Maschinenraum im Wesentlichen einer Lufttemperatur einer Umgebung entspricht oder nur geringfügig höher ist, kann zur Entlüftung des Maschinenraums auch ein ATEX-zertifizierter Lüfter bzw. Lüftermotor verwendet werden.

Alternativ umfasst die erfindungsgemäße Prüfkammer zur Konditionierung von Luft, insbesondere Temperierkammer, Klimakammer oder dergleichen, einen gegenüber einer Umgebung verschließbaren und temperaturisolierten Prüfraum zur Aufnahme von Prüfgut und eine Temperiervorrichtung zur Temperierung des Prüfraums, mittels der eine Temperatur in einem Temperaturbereich von -50 °C bis +180 °C innerhalb des Prüfraums ausbildbar ist, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum ausgebildet ist, wobei der Kühlkreislauf mit dem Verdichter zumindest teilweise in dem Maschinenraum angeordnet ist, wobei die Prüfkammer eine Lüftungsanlage mit einer Detektoreinrichtung mit zumindest einem Gassensor zur Detektion von Kältemittel in dem Prüfraum umfasst, wobei die Lüftungsanlage einen Lüfter und einen Abluftkanal umfasst, wobei der Abluftkanal an den Prüfraum und den Maschinenraum angeschlossen ist, derart, dass mittels des einen Lüfters Luft aus dem Maschinenraum und dem Prüfraum in den Abluftkanal förderbar ist.

Mit der erfindungsgemäßen Prüfkammer ist es ebenfalls möglich mittels der Lüftungsanlage den Prüfraum zu entlüften, wenn mit dem Gassensor in dem Prüfraum ein Kältemittel bzw. das in dem Kühlkreislauf verwendete Kältemittel detektiert wird. Da der Abluftkanal an den Prüfraum und den Maschinenraum angeschlossen ist, wird bei einem Betrieb des Lüfters Luft aus dem Maschinenraum und dem Prüfraum in den Abluftkanal gefördert. Dabei kommt es zu einer Mischung von Luft aus dem Prüfraum und dem Maschinenraum. In dem Maschinenraum weist die dort befindliche Luft eine Temperatur auf, die in etwa einer Lufttemperatur einer Umgebung entspricht oder die geringfügig höher ist. Durch das Mischen der Luft aus dem Maschinenraum und der Luft aus dem Prüfraum kann Luft aus dem Prüfraum mit einer stark abweichenden Temperatur von beispielsweise -50 °C oder +180 °C soweit mit der Luft aus dem Maschinenraum gemischt werden, dass sich eine Temperatur der Luft in dem Abluftkanal einstellt, die keine besondere an eine extreme Temperatur angepasste Ausbildung des Lüfters erforderlich macht. Durch den Anschluss des Abluftkanals an den Prüfraum und den Maschinenraum und die Verwendung eines gemeinsamen Lüfters für den Prüfraum und den Maschinenraum wird es folglich möglich, eine Absaugung von Luft unter Explosionsschutzbedingungen mit einfachen Mitteln bereitzustellen.

So kann der Lüfter für eine Verwendung in explosionsgefährdeten Bereichen, insbesondere entsprechend der ATEX-Produktrichtlinie und/oder der ATEX-Betriebsrichtlinie, ausgebildet sein. Da durch die Mischung der Luft des Prüfraums und des Maschinenraums in dem Abluftkanal moderate Temperaturen ausgebildet werden können, kann ein ATEX-zertifizierter Lüfter mit einem nutzbaren Temperaturbereich zwischen -20 °C und +60 °C verwendet werden. Die Lüftungsanlage wird dadurch besonders kostengünstig und einfach ausbildbar.

Der Abluftkanal kann mit einem ersten Kanalabschnitt an dem Prüfraum und mit einem zweiten Kanalabschnitt an dem Maschinenraum angeschlossen sein, wobei der erste Kanalabschnitt und der zweite Kanalabschnitt in einem gemeinsamen Kanalabschnitt des Abluftkanals münden können, wobei der Lüfter in dem gemeinsamen Kanalabschnitt angeordnet sein kann. So kann vorgesehen sein, dass der erste Kanalabschnitt und der zweite Kanalabschnitt in einer Strömungsrichtung vor dem Lüfter zu dem gemeinsamen Kanalabschnitt zusammengeführt sind. Der gemeinsame Kanalabschnitt kann auch unmittelbar nach dem Lüfter aus einem Gehäuse der Prüfkammer bzw. aus dem Maschinenraum herausgeführt sein, so dass sich eventuell explosionsfähiges Gemisch aus Luft und Kältemittel außerhalb der Prüfkammer in dem gemeinsamen Kanalabschnitt befindet.

Die Lüftungsanlage kann ein Stellventil aufweisen, welches in dem ersten Kanalabschnitt angeordnet ist. Mittels des Stellventils wird es möglich eine Luftmenge, die bei einem Betrieb des Lüfters aus dem Prüfraum abgesaugt wird, mit einer Luftmenge, die aus dem Maschinenraum abgesaugt wird, dosiert zu mischen. Diese Mischung kann dann in einem Verhältnis erfolgen, welches sicherstellt, dass Temperaturen oberhalb +60 °C und unterhalb -20 °C an dem Lüfter nicht erreicht werden. Das Stellventil kann eine einfache Klappe oder Blende in dem ersten Kanalabschnitt sein. Vorzugsweise ist das Stellventil so ausgebildet, dass ein Volumenstrom in dem ersten Kanalabschnitt nach Bedarf variiert werden kann.

Die Lüftungsanlage kann zumindest einen Sensor aufweisen, der in dem ersten Kanalabschnitt, dem zweiten Kanalabschnitt und/oder Zuluftkanal der Lüftungsanlage, der an dem Prüfraum angeschlossen ist, angeordnet sein kann, wobei der Sensor ein Strömungssensor und/oder Temperatursensor sein kann. So ist es dann möglich einen Volumenstrom und/oder eine Temperatur der Luft in dem jeweiligen Kanalabschnitt zu bestimmen. Anhand des Volumenstroms und der Temperatur kann eine bedarfsgerechte Mischung von Luft des Prüfraums und des Maschinenraums erfolgen, um zu einer gewünschten Lufttemperatur im gemeinsamen Kanalabschnitt bzw. Abluftkanal zu gelangen. Die Lüftungsanlage ist damit auch prinzipiell unabhängig von einem Betrieb der Prüfkammer bzw. der Temperiervorrichtung für den Prüfraum, da die Lüftungsanlage dann eigens zugeordnete Sensoren aufweist. Jedoch wäre es auch möglich die Lüftungsanlage soweit mit der Temperiervorrichtung zu verbinden, dass eine Lufttemperatur des Prüfraums, die von der Temperiervorrichtung gemessen wird, mit der Lüftungsanlage weiterzuverarbeiten.

Die Prüfkammer kann eine Regeleinrichtung aufweisen, mittels der eine Abluftemperatur in dem gemeinsamen Kanalabschnitt in einem Temperaturbereich von -20 °C bis +60 °C regelbar sein kann. Die Regeleinrichtung kann so eingerichtet sein, dass eine entsprechende Mischung von Luft aus dem Prüfraum und von Luft aus dem Maschinenraum erfolgt. Die Mischung kann durch ein mit der Regeleinrichtung regelbares Stellventil geregelt werden, wobei Temperaturen und/oder Volumenströme der jeweiligen Luftmengen über Sensoren ermittelt werden können.

Vorteilhaft kann der Lüfter innerhalb des Maschinenraums angeordnet sein. Da ein ATEX-konformer Lüfter verwendet werden kann, kann dieser dann auch in dem Maschinenraum angeordnet werden. Die Lüftungsanlage kann so weitestgehend innerhalb eines Gehäuses der Prüfkammer ausgebildet werden. Prinzipiell ist es aber auch möglich den Lüfter außerhalb des Maschinenraums anzuordnen.

Die Lüftungsanlage kann einen Zuluftkanal aufweisen, der an dem Prüfraum angeschlossen sein kann, wobei in dem Zuluftkanal und in dem Ablauftkanal, bevorzugt unmittelbar in einer Strömungsrichtung vor- und nachfolgend dem Prüfraum, jeweils zumindest ein Ventil angeordnet sein kann. Der Zuluftkanal kann den Prüfraum mit einer Umgebung verbinden. Über den Zuluftkanal kann dann Frischluft aus der Umgebung in den Prüfraum einströmen, wenn mittels des Lüfters Luft aus dem Prüfraum abgesaugt wird. Um zu verhindern, dass Luft ungehindert durch den Prüfraum hindurch strömt, auch wenn kein Lüfter in Betrieb ist, können jeweils Ventile in dem Zuluftkanal und in dem Abluftkanal bzw. in einem ersten Kanalabschnitt des Abluftkanals, sofern dieser vorhanden ist, angeordnet sein.

Das Ventil kann zumindest eine mittels einer Druckdifferenz betätigbare Klappe sein. Die Ventile können jeweils durch einfache Klappen ausgebildet sein. Die Klappen können sogenannte Pendelklappen sein, die bei Ausbildung einer Druckdifferenz, beispielsweise durch den Lüfter, selbsttätig öffnen. Beispielsweise können die Klappen aus Silikon ausgebildet sein.

Die Detektoreinrichtung kann zumindest einen weiteren Gassensor in bzw. an dem gegenüber dem Prüfraum luftdicht getrennten Maschinenraum umfassen. Mittels des weiteren Gassensors kann dann im Falle einer Leckage des Kühlkreislaufes innerhalb des Maschinenraums ein Austreten von Kältemittel in dem Maschinenraum detektiert werden. Auch hier kann dann mittels der Lüftungsanlage Luft aus alleine dem Maschinenraum oder alternativ aus dem Prüfraum und dem Maschinenraum gleichzeitig abgesaugt werden. In dem Maschinenraum kann ein Ventilkasten angeordnet sein, in dem Ventile der Kühleinrichtung bzw. des Kühlkreislaufs verbaut sind. Dabei kann vorgesehen sein, dass der Ventilkasten zum Maschinenraum hin offen ausgebildet ist, um einen Austritt von Kältemittel aus dem Ventilkasten sicherzustellen, sofern an dieser Stelle eine Leckage vorliegen sollte. Diese Leckage kann dann auch mittels des weiteren Gassensors detektiert werden. Der weitere Gassensor bzw. der Gassensor in dem Maschinenraum kann vorzugsweise an einem Boden des Maschinenraums angeordnet sein. So kann dann austretendes Kältemittel, bzw. Kohlenwasserstoff, welcher schwerer als Luft ist, auf den Boden herabsinken und dort sicher detektiert werden. Eventuelle Lüftungsöffnungen in dem Maschinenraum bzw. einem Gehäuse der Prüfkammer, können dann oberhalb des Bodens, beispielsweise 10 cm oberhalb des Bodens des Maschinenraums angeordnet sein, so dass das austretende Kältemittel nicht unbemerkt aus dem Maschinenraum herausgelangen kann.

Das Kältemittel kann frei von fluorierten Kohlenwasserstoffen, brennbar und/oder ein aus einem einzigen Stoff bestehendes Kältemittel sein. Beispielsweise kann das Kältemittel Propan, Ethan, Ethylen, Propen, Isobutan, Butan oder dergleichen sein. Das Kältemittel kann auch ein Kältemittelgemisch aus Kohlenwasserstoffen bzw. den vorgenannten Komponenten oder ein Kältemittelgemisch mit überwiegend Kohlenwasserstoffen sein. Weiter kann das Kältemittel frei von fluorierten Kohlenwasserstoffen sein. Dadurch wird es möglich, zukünftige regulative Anforderungen an Kältemittel zu erfüllen und die Nachteile von fluorierten Kohlenwasserstoffen zu vermeiden. Auch kann das Kältemittel geeignet sein, eine Temperatur in einem Temperaturbereich von -40 °C bis +180 °C, bevorzugt -70 °C bis +180 °C, besonders bevorzugt bis - 85 °C bis +200 °C, innerhalb des Prüfraums auszubilden.

Mittels der Temperiervorrichtung kann eine Temperatur in einem Temperaturbereich von -80 °C bis +180 °C, bevorzugt von -100 °C bis +200 °C, innerhalb des Prüfraums ausbildbar sein.

Bei dem erfindungsgemäßen Verfahren zum Betrieb einer Prüfkammer zur Konditionierung von Luft, insbesondere Temperierkammer, Klimakammer oder dergleichen, weist die Prüfkammer einen gegenüber einer Umgebung verschließbaren und temperaturisolierten Prüfraum zur Aufnahme von Prüfgut auf, wobei der Prüfraum mit einer Temperiervorrichtung der Prüfkammer temperiert wird, wobei mittels der Temperiervorrichtung eine Temperatur in einem Temperaturbereich von -50 °C bis +180 °C innerhalb des Prüfraums ausgebildet wird, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum ausgebildet ist, wobei der Kühlkreislauf mit dem Verdichter zumindest teilweise in dem Maschinenraum angeordnet ist, wobei mit zumindest einem in oder an dem Prüfraum angeordneten Gassensor einer Detektoreinrichtung einer Lüftungsanlage der Prüfkammer Kältemittel in dem Prüfraum detektiert wird, wobei mittels eines Lüfters der Lüftungsanlage Luft aus dem Prüfraum in einen Abluftkanal der Lüftungsanlage, der an den Prüfraum angeschlossen ist, gefördert wird, wobei der Lüfter einen Lüftermotor und ein Lüfterrad umfasst, wobei der Lüftermotor in einer luftdichten Einhausung angeordnet ist. Zu den vorteilhaften Wirkungen des erfindungsgemäßen Verfahrens wird auf die Vorteilsbeschreibung der erfindungsgemäßen Prüfkammer gemäß Anspruch 1 verwiesen.

Bei dem alternativen Verfahren zum Betrieb einer Prüfkammer zur Konditionierung von Luft, insbesondere Temperierkammer, Klimakammer oder dergleichen, weist die Prüfkammer einen gegenüber einer Umgebung verschließbaren und temperaturisolierten Prüfraum zur Aufnahme von Prüfgut auf, wobei der Prüfraum mit einer Temperiervorrichtung der Prüfkammer temperiert wird, wobei mittels der Temperiervorrichtung eine Temperatur in einem Temperaturbereich von -50 °C bis +180 °C innerhalb des Prüfraums ausgebildet wird, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum ausgebildet ist, wobei der Kühlkreislauf mit dem Verdichter zumindest teilweise in dem Maschinenraum angeordnet ist, wobei mit zumindest einem Gassensor einer Detektoreinrichtung einer Lüftungsanlage der Prüfkammer Kältemittel in dem Prüfraum detektiert wird, wobei mittels eines Lüfters der Lüftungsanlage Luft aus dem Maschinenraum und dem Prüfraum in einen Abluftkanal der Lüftungsanlage, der an den Prüfraum und den Maschinenraum angeschlossen ist, gefördert wird. Zu den vorteilhaften Wirkungen des erfindungsgemäßen Verfahrens wird auf die Vorteilsbeschreibung der erfindungsgemäßen Prüfkammer gemäß Anspruch 7 verwiesen.

Weiter kann die Lüftungsanlage mittels einer Steuervorrichtung der Prüfkammer betrieben werden, wenn die Detektoreinrichtung Kältemittel detektiert. Die Prüfkammer kann die Steuervorrichtung zur generellen Steuerung und Regelung von Baugruppen der Prüfkammer, beispielsweise der Temperiervorrichtung, der Heizeinrichtung und der Kühlreinrichtung usw. aufweisen. So kann dann auch die Lüftungsanlage mittels dieser Steuervorrichtung gesteuert werden. Wenn die Detektoreinrichtung mittels des Gassensors Kältemittel detektiert, kann die Steuervorrichtung die Lüftungsanlage unmittelbar nach der Detektion von Kältemittel einschalten und so ein Absaugen von Luft aus zumindest dem Prüfraum und/oder dem Maschinenraum auslösen. Optional kann auch vorgesehen sein, mittels des Gassensors die Menge von Kältemittel in der Luft zu detektieren. So ist es dann möglich die Lüftungsanlage erst dann einzuschalten, wenn die reale Gefahr einer Bildung eines explosionsfähigen Gemisches besteht. Darüber hinaus kann die Steuervorrichtung dazu genutzt werden, die Temperiervorrichtung mit der Heizeinrichtung und der Kühleinrichtung abzuschalten, wenn Kältemittel detektiert wird. So kann gegebenenfalls ein weiterer Austritt von Kältemittel aus dem Kühlkreislauf und/oder eine Entzündung von Kältemittel innerhalb des Prüfraums mit der Heizeinrichtung verhindert werden. Auch kann vorgesehen sein, dass die Steuervorrichtung bei einer Detektion von Kältemittel eine Betriebsstörung signalisiert. Dies kann beispielsweise durch Tonsignale und/oder Lichtsignale gegenüber einer Bedienperson erfolgen.

Mittels einer Steuervorrichtung der Prüfkammer kann eine Funktionsprüfung der Lüftungsanlage durchgeführt werden, bevor die Temperiervorrichtung in Betrieb gesetzt werden kann. Die Funktionsprüfung der Lüftungsanlage kann beispielsweise dadurch erfolgen, dass der Lüfter der Lüftungsanlage in Betrieb gesetzt wird, derart, dass zunächst der Prüfraum und/oder der Maschinenraum entlüftet wird. So kann dann auch sichergestellt werden, dass sich bei Inbetriebsetzung der Temperiervorrichtung Luft aus einer Umgebung der Prüfkammer in dem Prüfraum bzw. dem Maschinenraum befindet. Eventuell dort zuvor befindliche Gase oder dergleichen können dann mittels der Lüftungsanlage beseitigt werden. Ein Zugang zu dem Prüfraum, beispielsweise für Arbeiten am Prüfgut oder für eine Beladung des Prüfraums mit Prüfgut, kann dann für eine Bedienperson gefahrlos erfolgen.

Darüber hinaus kann zumindest ein Sensor in dem Abluftkanal, oder jeweils in einem ersten Kanalabschnitt, einem zweiten Kanalabschnitt und/oder einem weiteren Kanalabschnitt des Abluftkanals, vorgesehen sein, mit dem eine Luftbewegung in dem Abluftkanal ermittelbar ist. Der Sensor kann beispielsweise ein einfacher Paddelschalter sein. Zumindest wird es dann möglich eine einfache Funktionsprüfung der Lüftungsanlage durchzuführen. Bei einem Einschalten der Prüfkammer kann dann zunächst die Funktionsprüfung der Lüftungsanlage durchgeführt werden, bevor ein Hauptschalter oder Relais die übrigen Baugruppen der Prüfkammer bzw. die Temperiervorrichtung mit elektrischer Energie versorgt. Gleichfalls kann mittels der Steuervorrichtung eine sogenannte Notabschaltung der Prüfkammer bzw. der übrigen Baugruppen erfolgen, wenn mit dem Gassensor Kältemittel detektiert wird, und die Lüftungsanlage in Betrieb gesetzt wird.

Weiter vorteilhafte Ausführungsformen des Verfahrens ergeben sich aus den Merkmalsbeschreibungen der auf die Vorrichtungsansprüche 1 und 6 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer Prüfkammer in einer Schnittansicht;
- **Fig. 2**: eine schematische Darstellung der Prüfkammer in einer perspektivischen Teilansicht;
- **Fig. 3**: eine schematische Prinzipdarstellung einer Ausführungsform der Prüfkammer;
- **Fig. 4**: eine schematische Prinzipdarstellung einer weiteren Ausführungsform der Prüfkammer.

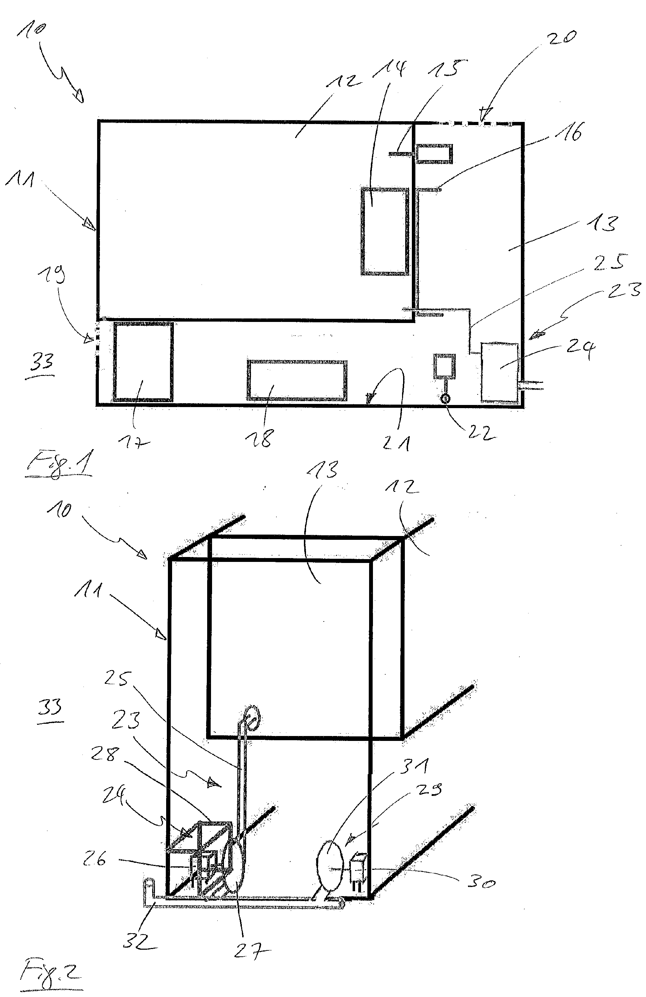

Die **Fig. 1** und **2** zeigen schematische Darstellungen einer Prüfkammer 10 mit einem Gehäuse 11, innerhalb dem ein Prüfraum 12 und ein Maschinenraum 13 gebildet ist. In dem Prüfraum 12 ist ein Wärmeübertrager 14 eines hier nicht näher dargestellten Kühlkreislaufes einer Temperiervorrichtung der Prüfkammer 10 angeordnet. Mittels eines Prüfraumlüfters 15 kann Luft innerhalb des Prüfraums 12 an dem Wärmeübertrager 14 vorbei zirkuliert werden. In dem Maschinenraum 13 ist ein Ventilkasten 16 angeordnet, an dem hier nicht dargestellte Ventile des Kühlkreislaufs verbaut sind. Der Ventilkasten 16 ist offen gegenüber dem Maschinenraum 13 ausgebildet. In dem Maschinenraum 13 sind weiter ein Kondensator 17 und ein Verdichter 18 des Kühlkreislaufs angeordnet. In dem Maschinenraum 13 sind Öffnungen 19 und 20 zur Durchlüftung des Maschinenraums 13 ausgebildet. An einem Boden 21 des Maschinenraums 13 ist ein Gassensor 22 einer hier nicht weiter dargestellten Detektoreinrichtung angeordnet. Darüber hinaus ist in dem Maschinenraum 13 eine Lüftungsanlage 23 vorgesehen. Die Lüftungsanlage 23 umfasst einen Lüfter 24 und einen Abluftkanal 25, der an den Prüfraum 12 angeschlossen ist. Mittels des Lüfters 24 kann Luft aus dem Prüfraum 12 in den Abluftkanal 25 gefördert werden, wenn mittels eines hier nicht dargestellten Gassensors in bzw. an dem Prüfraum 12 oder mittels des Gassensors 22 Kältemittel, insbesondere Kohlenwasserstoff oder ein Kältemittelgemisch aus Kohlenwasserstoffen, im Prüfraum 12 oder im Maschinenraum 13 detektiert wird.

Der Lüfter 24 umfasst einen Lüftermotor 26 und ein Lüfterrad 27, wobei der Lüftermotor 26 in einer luftdichten Einhausung 28 angeordnet ist. Die Einhausung 28 ist aus Blech ausgebildet und innerhalb des Maschinenraums 13 angeordnet. Die Lüftungsanlage 23 kann gemäß der Darstellung in Fig. 2 einen weiteren Lüfter 29 umfassen, der aus einem Lüftermotor 30 und einem Lüfterrad 31 gebildet ist. Mit dem weiteren Lüfter 29 wird eine Entlüftung des Maschinenraums 13 ermöglicht. Bei dem Lüftermotor 26 kann es sich um einen konventionellen Lüftermotor handeln, welcher nicht für einen Betrieb in explosionsgefährdeten Bereichen vorgesehen sein muss. Der weitere Lüfter 29 ist dagegen für eine Verwendung in explosionsgefährdeten Bereichen bestimmt. Der Lüfter 24 und der weitere Lüfter 29 sind an einen gemeinsamen Kanalabschnitt 32 des Abluftkanals 25 angeschlossen. Der gemeinsame Kanalabschnitt 32 verläuft hier außerhalb des Gehäuses 11 in eine Umgebung 33. Ein eventuelles, explosionsfähiges Gemisch von Kältemittel und Luft befindet sich dann außerhalb des Gehäuses 11.

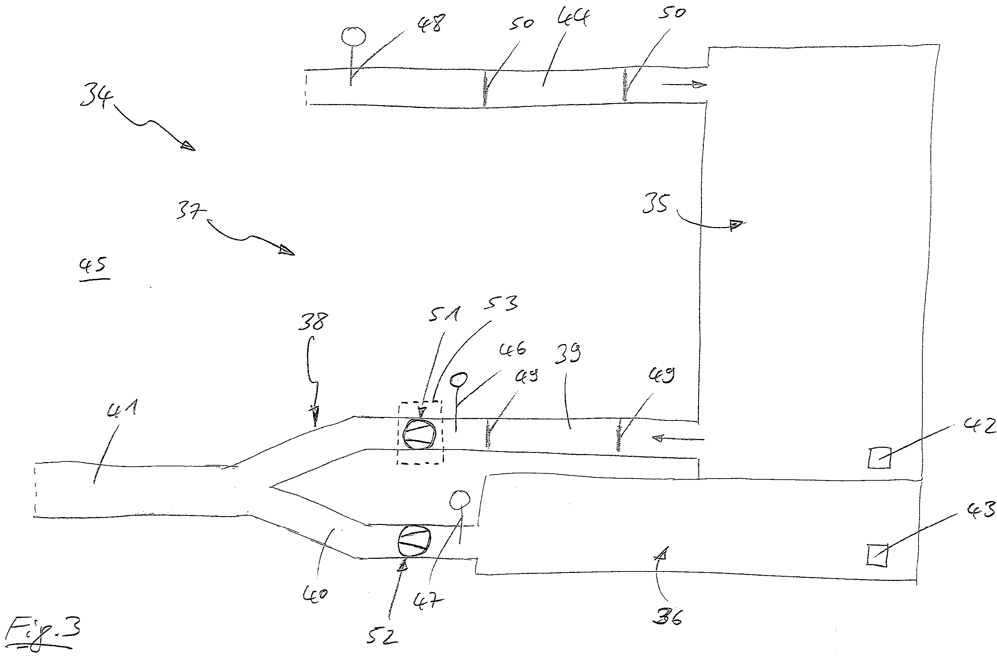

Die **Fig. 3** zeigt eine Prüfkammer 34 mit einem Prüfraum 35 und einem Maschinenraum 36. Die Prüfkammer 34 ist mit einer Lüftungsanlage 37 ausgebildet, welche einen Abluftkanal 38 mit einem ersten Kanalabschnitt 39, einem zweiten Kanalabschnitt 40 und einem gemeinsamen Kanalabschnitt 41 aufweist. Weiter ist in dem Prüfraum 35 ein Gassensor **42** und in dem Maschinenraum 36 ein weiterer Gassensor 43 angeordnet. Der Gassensor 42 kann auch außerhalb des Prüfraums 35 angeordnet und über beispielsweise einen Kanal mit dem Prüfraum 35 verbunden sein. Darüber hinaus ist ein Zuluftkanal 44 vorgesehen, über den Luft aus einer Umgebung 45 in den Prüfraum 35 eingeleitet werden kann. In dem ersten Kanalabschnitt 39, dem zweiten Kanalabschnitt 40 und dem Zuluftkanal 44 sind jeweils Sensoren 46, 47 und 48 angeordnet. Die Sensoren 46, 47 und 48 sind Strömungssensoren und/oder Temperatursensoren mittels derer ein Volumenstrom und/oder eine Temperatur der dort befindlichen Luft gemessen werden kann. In dem ersten Kanalabschnitt 39 sind mittels einer Druckdifferenz betätigbare Klappen 49 und in dem Zuluftkanal 44 ebenfalls derart betätigbare Klappen 50 angeordnet. In dem ersten Kanalabschnitt 39 ist ein Lüfter 51 und in dem zweiten Kanalabschnitt 40 ein weiterer Lüfter 52 angeordnet. Der Lüfter 51 verfügt über eine Einhausung 53 mit der ein hier nicht näher dargestellter Lüftermotor luftdicht abgeschirmt ist.

Im Falle einer Leckage eines hier nicht näher dargestellten Kühlkreislaufes und einem Austritt von Kältemittel, welches ein Kohlenwasserstoff oder ein Kältemittelgemisch aus Kohlenwasserstoffen ist, in dem Prüfraum 35 oder dem Maschinenraum 36 kann dieses Kältemittel mittels der Gassensoren 42 bzw. 43 detektiert werden. Mittels einer hier nicht dargestellten Steuervorrichtung der Prüfkammer 34 wird dann die Lüftungsanlage 37 bzw. der Lüfter 51 und der weitere Lüfter 52 eingeschaltet. Eine hier nicht dargestellte Regeleinrichtung der Steuervorrichtung kann über die Sensoren 46, 47 und/oder 48 eine Funktion der Lüfter 51 bzw. 52 überwachen. Insbesondere vor einer Inbetriebsetzung einer Temperiervorrichtung der Prüfkammer 34 kann eine derartige Funktionsprüfung durchgeführt werden. Der Lüfter 51 und der weitere Lüfter 52 können auch unabhängig voneinander betrieben werden. In jedem Fall mündet der erste Kanalabschnitt 39 und der zweite Kanalabschnitt 40 in den gemeinsamen Kanalabschnitt 41. Der gemeinsame Kanalabschnitt 41 mündet dann wieder in der Umgebung 45. Die Klappen 49 und 50 können aus Silikon bestehen und durch eine Druckdifferenz betätigbar sein. Der Prüfraum 35 ist dann durch die Klappen 49 und 50 verschlossen, wenn der Lüfter 51 nicht in Betrieb ist. Bei dem Lüfter 51 kann es sich um einen konventionellen Lüfter handeln, welcher nicht explizit zur Verwendung in explosionsgefährdeten Bereichen ausgebildet ist. Der weitere Lüfter 52 ist für eine Verwendung in explosionsgefährdeten Bereichen ausgebildet.

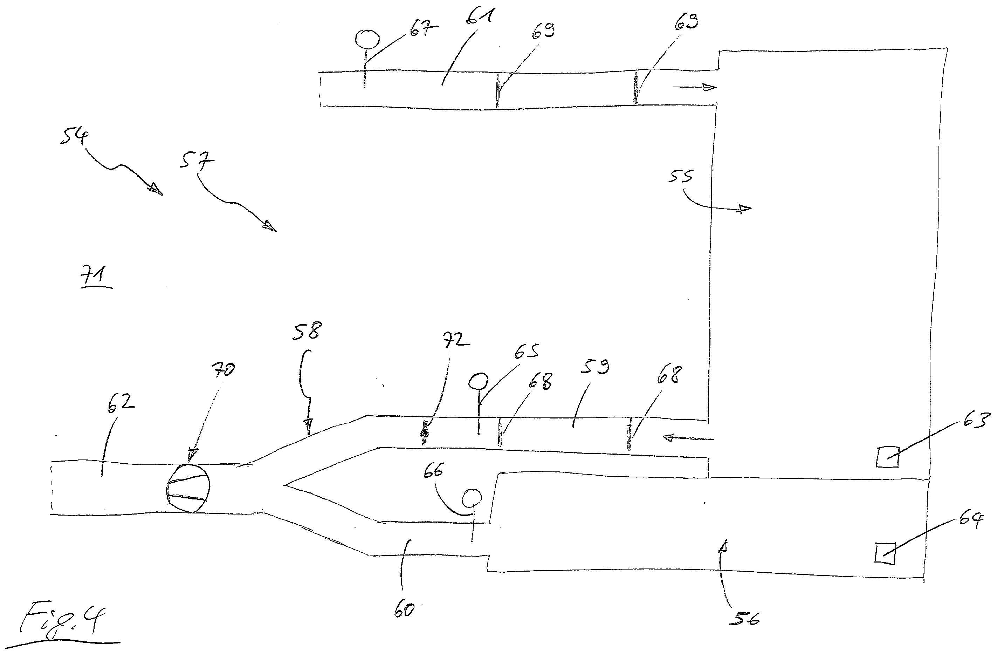

Die Fig. 4 zeigt eine Prüfkammer 54 mit einem Prüfraum 55 und einem Maschinenraum 56 sowie eine Lüftungsanlage 57. Die Lüftungsanlage 57 umfasst einen Abluftkanal 58 mit einem ersten Kanalabschnitt 59, einem zweiten Kanalabschnitt 60 und einem Zuluftkanal 61. Der erste Kanalabschnitt 59 und der Zuluftkanal 61 sind an den Prüfraum 55 angeschlossen. Der zweite Kanalabschnitt 60 ist an den Maschinenraum 56 angeschlossen. Der erste Kanalabschnitt 59 und der zweite Kanalabschnitt 60 münden in einen gemeinsamen Kanalabschnitt 62 des Abluftkanals 58. In dem Prüfraum 55 ist ein Gassensor 63 und in dem Maschinenraum 56 ein weiterer Gassensor 64 zur Detektion von Kältemittel, insbesondere Kohlenwasserstoff oder ein Kältemittelgemisch aus Kohlenwasserstoffen, angeordnet. In dem ersten Kanalabschnitt 59, dem zweiten Kanalabschnitt 60 und dem Zuluftkanal 61 sind darüber hinaus Sensoren 65, 66, und 67 angeordnet, mittels derer eine Temperatur und/oder eine Luftströmung bzw. ein Volumenstrom innerhalb der Kanalabschnitte 59 und 60 bzw. dem Zuluftkanal 61 erfassbar ist. Darüber hinaus sind in dem ersten Kanalabschnitt 59 und in dem Zuluftkanal 61 jeweils Klappen 68 und 69 angeordnet, die beispielsweise aus Silikon ausgebildet sein können und mittels derer der Prüfraum 55 verschlossen werden kann. Die Klappen 58 und 59 können so ausgebildet sein, dass sie bei einer Druckdifferenz selbsttätig öffnen.

In dem gemeinsamen Kanalabschnitt 62 ist ein Lüfter 70 angeordnet, mittels dem Luft aus dem Prüfraum 55 und dem Maschinenraum 56 gefördert bzw. abgesaugt werden kann. Dabei kann insbesondere Luft aus einer Umgebung 71 durch den Zuluftkanal 61 nachströmen. Die angesaugte Luft wird von dem Lüfter 70 über den gemeinsamen Kanalabschnitt 62 wieder in die Umgebung 71 ausgeblasen. Ein Verhältnis der von aus dem Prüfraum 55 und dem Maschinenraum 56 abgesaugten Luft wird mittels eines Stellventils 72, welches in dem ersten Kanalabschnitt 59 angeordnet ist, eingestellt bzw. geregelt. Das Stellventil 72 wird mittels einer nicht dargestellten Regeleinrichtung einer ebenfalls nicht gezeigten Steuervorrichtung der Prüfkammer 54 geregelt. Diese Regelung erfolgt mithilfe zumindest der Sensoren 65 und 66. Dabei wird eine Temperatur und optional ein Volumenstrom der zu fördernden Luft in dem ersten Kanalabschnitt 59 und dem zweiten Kanalabschnitt 60 gemessen und mittels des Stellventils 72 so in Strömungsrichtung vor dem Lüfter 70 gemischt, dass am Lüfter 70 ein Temperaturbereich, für den der Lüfter 70 ausgebildet ist, nicht über- oder unterschritten wird. Der Lüfter 70 ist für eine Verwendung in explosionsgefährdeten Bereichen, beispielsweise für einen Temperaturbereich von +60 °C bis -20 °C ausgebildet. Erst die Ausbildung der Lüftungsanlage 57 in der dargestellten Weise ermöglicht die Nutzung des Lüfters 70.

## Patentansprüche

1. Prüfkammer (10, 34) zur Konditionierung von Luft, insbesondere Temperierkammer, Klimakammer oder dergleichen, wobei die Prüfkammer einen gegenüber einer Umgebung (33, 45) verschließbaren und temperaturisolierten Prüfraum (12, 35) zur Aufnahme von Prüfgut, und eine Temperiervorrichtung zur Temperierung des Prüfraums umfasst, wobei die Temperiervorrichtung eine Heizeinrichtung und eine Kühleinrichtung mit einem Kühlkreislauf mit einem Kältemittel, einem Wärmeübertrager (14) in dem Prüfraum, einem Verdichter (18), einem Kondensator (17) und einem Expansionsorgan aufweist, wobei die Prüfkammer mit einem vom Prüfraum räumlich abgetrennten Maschinenraum (13, 36) ausgebildet ist, wobei der Kühlkreislauf mit dem Verdichter zumindest teilweise in dem Maschinenraum angeordnet ist,
wobei mittels der Temperiervorrichtung eine Temperatur in einem Temperaturbereich von -50 °C bis +180 °C innerhalb des Prüfraums ausbildbar ist, wobei das Kältemittel ein Kohlenwasserstoff oder ein Kältemittelgemisch aus Kohlenwasserstoffen ist, wobei die Prüfkammer eine Lüftungsanlage (23, 37) mit einer Detektoreinrichtung mit zumindest einem Gassensor (22, 42) in oder an dem Prüfraum zur Detektion von Kältemittel in dem Prüfraum umfasst, wobei die Lüftungsanlage einen Lüfter (24, 51) und einen Abluftkanal (25, 38) umfasst, wobei der Abluftkanal an den Prüfraum angeschlossen ist, derart, dass mittels des Lüfters Luft aus dem Prüfraum in den Abluftkanal förderbar ist, wobei der Lüfter einen Lüftermotor (26) und ein Lüfterrad (27) umfasst, wobei der Lüftermotor in einer luftdichten Einhausung (28, 53) angeordnet ist.

2. Prüfkammer nach Anspruch 1,
**dadurch gekennzeichnet,**
**dass** die Einhausung (28, 53) aus Metall oder Metallblech ausgebildet ist und den Lüftermotor (26) zumindest gegenüber dem Abluftkanal (25, 38), dem Prüfraum (12, 35) und/oder dem Maschinenraum (13, 36) luftdicht abtrennt.

3. Prüfkammer nach einem der vorangehenden Ansprüche,
**dadurch gekennzeichnet,**
**dass** der Abluftkanal (25, 38) mit einem ersten Kanalabschnitt (39) an den Prüfraum (12, 35) und mit einem zweiten Kanalabschnitt (40) an den Maschinenraum (13, 36) angeschlossen ist, wobei der Lüfter (24, 51) in dem ersten Kanalabschnitt angeordnet ist, wobei ein weiterer Lüfter (29, 52) der Lüftungsanlage (23, 37) in dem weiteren Kanalabschnitt angeordnet ist.

4. Prüfkammer nach Anspruch 3,
**dadurch gekennzeichnet,**
**dass** der erste Kanalabschnitt (39) und der zweite Kanalabschnitt (40) in einen gemeinsamen Kanalabschnitt (32, 41) des Abluftkanals (25, 38) münden.

5. Prüfkammer nach Anspruch 3 oder 4,
**dadurch gekennzeichnet,**
**dass** der weitere Lüfter (29, 52) für eine Verwendung in explosionsgefährdenden Bereichen, insbesondere entsprechend der ATEX-Produktrichtlinie und/oder der ATEX-Betriebsrichtlinie in der am Prioritätstag gültigen Fassung, ausgebildet ist.

6. Prüfkammer (54) zur Konditionierung von Luft, insbesondere Temperierkammer, Klimakammer oder dergleichen, wobei die Prüfkammer einen gegenüber einer Umgebung (71) verschließbaren und temperaturisolierten Prüfraum (55) zur Aufnahme von Prüfgut, und eine Temperiervorrichtung zur Temperierung des Prüfraums umfasst, mittels der eine Temperatur in einem Temperaturbereich von -50 °C bis +180 °C innerhalb des Prüfraums ausbildbar ist, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum (56) ausgebildet ist, wobei der Kühlkreislauf mit dem Verdichter zumindest teilweise in dem Maschinenraum angeordnet ist,
wobei die Prüfkammer eine Lüftungsanlage (57) mit einer Detektoreinrichtung mit zumindest einem Gassensor (63) in dem Prüfraum zur Detektion von Kältemittel in dem Prüfraum umfasst, wobei die Lüftungsanlage einen Lüfter (70) und einen Abluftkanal (58) umfasst,
wobei der Abluftkanal an den Prüfraum und den Maschinenraum angeschlossen ist, derart, dass mittels des einen Lüfters Luft aus dem Maschinenraum und dem Prüfraum in den Abluftkanal förderbar ist.

7. Prüfkammer nach Anspruch 6,
**dadurch gekennzeichnet,**
**dass** der Lüfter (70) für eine Verwendung in explosionsgefährdenden Bereichen, insbesondere entsprechend der ATEX-Produktrichtlinie und/oder der ATEX-Betriebsrichtlinie in der am Prioritätstag gültigen Fassung, ausgebildet ist.

8. Prüfkammer nach Anspruch 6 oder 7,
**dadurch gekennzeichnet,**
**dass** der Abluftkanal (58) mit einem ersten Kanalabschnitt (59) an den Prüfraum (55) und mit einem zweiten Kanalabschnitt (60) an den Maschinenraum (56) angeschlossen ist, wobei der erste Kanalabschnitt und der zweite Kanalabschnitt in einen gemeinsamen Kanalabschnitt (62) des Abluftkanals münden, wobei der Lüfter (70) in dem gemeinsamen Kanalabschnitt angeordnet ist.

9. Prüfkammer nach einem der Ansprüche 6 bis 8,
**dadurch gekennzeichnet,**
**dass** die Lüftungsanlage (57) ein Stellventil (72) aufweist, welches in dem ersten Kanalabschnitt (59) angeordnet ist.

10. Prüfkammer nach einem der Ansprüche 6 bis 9,
**dadurch gekennzeichnet,**
**dass** die Lüftungsanlage (57) zumindest einen Sensor (65, 66, 67) aufweist, der in dem ersten Kanalabschnitt (59), dem zweiten Kanalabschnitt (60) und/oder einem Zuluftkanal (61) der Lüftungsanlage, der an dem Prüfraum (55) angeschlossen ist, angeordnet ist, wobei der Sensor ein Strömungssensor und/oder Temperatursensor ist.

11. Prüfkammer nach einem der Ansprüche 6 bis 10,
**dadurch gekennzeichnet,**
**dass** die Prüfkammer (54) eine Regeleinrichtung aufweist, mittels der eine Ablufttemperatur in dem gemeinsamen Kanalabschnitt (62) in einem Temperaturbereich von -20 °C bis +60 °C regelbar ist.

12. Prüfkammer nach einem der vorangehenden Ansprüche,
**dadurch gekennzeichnet,**
**dass** der Lüfter (24, 51, 70) innerhalb des Maschinenraums (13, 36, 56) angeordnet ist.

13. Prüfkammer nach einem der vorangehenden Ansprüche,
**dadurch gekennzeichnet,**
**dass** die Lüftungsanlage (23, 37, 57) einen Zuluftkanal (44, 61) aufweist, der an dem Prüfraum (12, 35, 55) angeschlossen ist, wobei in dem Zuluftkanal und in dem Abluftkanal (25, 38, 58), bevorzugt unmittelbar in einer Strömungsrichtung vor und nachfolgend dem Prüfraum, jeweils zumindest ein Ventil angeordnet ist.

14. Prüfkammer nach Anspruch 13,
**dadurch gekennzeichnet,**
**dass** das Ventil zumindest eine mittels einer Druckdifferenz betätigbare Klappe (49, 50, 68, 69) ist.

15. Prüfkammer nach einem der vorangehenden Ansprüche,
**dadurch gekennzeichnet,**
**dass** die Detektoreinrichtung zumindest einen weiteren Gassensor (43, 64) in dem gegenüber dem Prüfraum (12, 35, 55) luftdicht getrennten Maschinenraum (13, 36, 56) umfasst.

16. Prüfkammer nach einem der vorangehenden Ansprüche,
**dadurch gekennzeichnet,**
**dass** das Kältemittel frei von fluorierten Kohlenwasserstoffen, brennbar und/oder ein aus einem einzigen Stoff bestehendes Kältemittel ist.

17. Prüfkammer nach einem der vorangehenden Ansprüche,
**dadurch gekennzeichnet,**
**dass** mittels der Temperiervorrichtung eine Temperatur in einem Temperaturbereich von -80 °C bis +180 °C, bevorzugt von -100 °C bis +200 °C, innerhalb des Prüfraums (12, 35, 55) ausbildbar ist.

18. Verfahren zum Betrieb einer Prüfkammer (10, 34) zur Konditionierung von Luft, insbesondere Temperierkammer, Klimakammer oder dergleichen, wobei die Prüfkammer einen gegenüber einer Umgebung (33, 45) verschließbaren und temperaturisolierten Prüfraum (12, 35) zur Aufnahme von Prüfgut aufweist, wobei der Prüfraum mit einer Temperiervorrichtung der Prüfkammer temperiert wird, wobei die Temperiervorrichtung eine Heizeinrichtung und eine Kühleinrichtung mit einem Kühlkreislauf mit einem Kältemittel, einem Wärmeübertrager (14) in dem Prüfraum, einem Verdichter (18), einem Kondensator (17) und einem Expansionsorgan aufweist, wobei die Prüfkammer mit einem vom Prüfraum räumlich abgetrennten Maschinenraum (13, 36) ausgebildet ist, wobei der Kühlkreislauf mit dem Verdichter zumindest teilweise in dem Maschinenraum angeordnet ist,
wobei mittels der Temperiervorrichtung eine Temperatur in einem Temperaturbereich von -50 °C bis +180 °C innerhalb des Prüfraums ausgebildet wird, wobei das Kältemittel ein Kohlenwasserstoff oder ein Kältemittelgemisch aus Kohlenwasserstoffen ist, wobei mit zumindest einem in oder an dem Prüfraum angeordneten Gassensor (22, 42) einer Detektoreinrichtung einer Lüftungsanlage (23, 37) der Prüfkammer Kältemittel in dem Prüfraum detektiert wird, wobei mittels eines Lüfters (24, 51) der Lüftungsanlage Luft aus dem Prüfraum in einen Abluftkanal (25, 38) der Lüftungsanlage, der an den Prüfraum angeschlossen ist, gefördert wird, wobei der Lüfter einen Lüftermotor (26) und ein Lüfterrad (27) umfasst, wobei der Lüftermotor in einer luftdichten Einhausung (28, 53) angeordnet ist.

19. Verfahren nach Anspruch 18,
**dadurch gekennzeichnet,**
**dass** eine Ablufttemperatur in dem Abluftkanal (25, 38) in etwa der Temperatur innerhalb des Prüfraums (12, 35) entspricht.

20. Verfahren zum Betrieb einer Prüfkammer (54) zur Konditionierung von Luft, insbesondere Temperierkammer, Klimakammer oder dergleichen, wobei die Prüfkammer einen gegenüber einer Umgebung (71) verschließbaren und temperaturisolierten Prüfraum (55) zur Aufnahme von Prüfgut aufweist, wobei der Prüfraum mit einer Temperiervorrichtung der Prüfkammer temperiert wird, wobei mittels der Temperiervorrichtung eine Temperatur in einem Temperaturbereich von -50 °C bis +180 °C innerhalb des Prüfraums ausgebildet wird, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei das Kältemittel ein Kohlenwasserstoff oder ein Kältemittelgemisch aus Kohlenwasserstoffen ist, wobei die Prüfkammer mit einem vom Prüfraum räumlich abgetrennten Maschinenraum (56) ausgebildet ist, wobei der Kühlkreislauf mit dem Verdichter zumindest teilweise in dem Maschinenraum angeordnet ist,
wobei mit zumindest einem in dem Prüfraum angeordneten Gassensor (63) einer Detektoreinrichtung einer Lüftungsanlage (57) der Prüfkammer Kältemittel in dem Prüfraum detektiert wird, wobei mittels eines Lüfters (70) der Lüftungsanlage Luft aus dem Maschinenraum und dem Prüfraum in einen Abluftkanal (58) der Lüftungsanlage, der an den Prüfraum und den Maschinenraum angeschlossen ist, gefördert wird.

21. Verfahren nach Anspruch 19 oder 20,
**dadurch gekennzeichnet,**
**dass** die Lüftungsanlage (23, 37, 57) mittels einer Steuervorrichtung der Prüfkammer (10, 34, 54) betrieben wird, wenn die Detektoreinrichtung Kältemittel detektiert.

22. Verfahren nach einem der Ansprüche 19 bis 21,
**dadurch gekennzeichnet,**
**dass** mittels einer Steuervorrichtung der Prüfkammer (10, 34, 54) eine Funktionsprüfung der Lüftungsanlage (23, 37, 57) durchgeführt wird, bevor die Temperiervorrichtung in Betrieb gesetzt wird.

## Claims

1. A test chamber (10, 34) for conditioning air, in particular a temperature control chamber, a climate chamber or the like, the test chamber comprising a temperature-insulated test space (12, 35), which can be sealed from an environment (33, 45) and serves to hold test material, and a temperature control device for controlling the temperature of the test space, the temperature control device having a heating feature and a cooling feature with a cooling circuit with a refrigerant, a heat exchanger (14) in the test space, a compressor (18), a condenser (17) and an expansion member, the test chamber being provided with a machine room (13, 36) physically separated from the test space, the cooling circuit with the compressor being at least partially disposed in the machine room, the temperature control device being configured to establish a temperature in a temperature range of -50 °C to +180 °C within the test space, the refrigerant being a hydrocarbon or a refrigerant mixture of hydrocarbons, the test chamber comprising a ventilation system (23, 37) having a detector with at least one gas sensor (22, 42) in or on the test space for detecting refrigerant in the test space, the ventilation system comprising a fan (24, 51) and an exhaust duct (25, 38), the exhaust duct being connected to the test space in such a manner that the fan can transport air from the test space into the exhaust duct, the fan comprising a fan motor (26) and a fan impeller (27), the fan motor being disposed in an air-tight enclosure (28, 53).

2. The test chamber according to claim 1,
**characterized in that**
the enclosure (28, 53) is made of metal or sheet metal and separates the fan motor (26) at least from the exhaust duct (25, 38), the test space (12, 35) and/or the machine room (13, 36) in an air-tight manner.

3. The test chamber according to any one of the preceding claims,
**characterized in that**
the exhaust duct (25, 38) is connected to the test space (12, 35) via a first duct section (39) and to the machine room (13, 36) via a second duct section (40), the fan (24, 51) being disposed in the first duct section, another fan (29, 52) of the ventilation system (23, 37) being disposed in the other duct section.

4. The test chamber according to claim 3,
**characterized in that**
the first duct section (39) and the second duct section (40) end in a common duct section (32, 41) of the exhaust duct (25, 38).

5. The test chamber according to claim 3 or 4,
**characterized in that**
the other fan (29, 52) is configured for use in explosive atmospheres, in particular according to the ATEX equipment directive and/or the ATEX workplace directive valid on the day of priority.

6. A test chamber (54) for conditioning air, in particular a temperature control chamber, a climate chamber or the like, the test chamber comprising a temperature-insulated test space (55), which can be sealed from an environment (71) and serves to hold test material, and a temperature control device for controlling the temperature of the test space, the temperature control device being configured to establish a temperature in a temperature range of -50 °C to +180 °C within the test space, the temperature control device having a heating feature and a cooling feature with a cooling circuit with a refrigerant, a heat exchanger in the test space, a compressor, a condenser and an expansion member, the refrigerant being a hydrocarbon or a refrigerant mixture of hydrocarbons, the test chamber being provided with a machine room (56) physically separated from the test space, the cooling circuit with the compressor being at least partially disposed in the machine room, the test chamber comprising a ventilation system (57) having a detector with at least one gas sensor (63) in the test space for detecting refrigerant in the test space, the ventilation system comprising a fan (70) and an exhaust duct (58), the exhaust duct being connected to the test space and the machine room in such a manner that the one fan can transport air from the machine room and the test space into the exhaust duct.

7. The test chamber according to claim 6,
**characterized in that**
the fan (70) is configured for use in explosive atmospheres, in particular according to the ATEX equipment directive and/or the ATEX workplace directive valid on the day of priority.

8. The test chamber according to claim 6 or 7,
**characterized in that**
the exhaust duct (58) is connected to the test space (55) via a first duct section (59) and to the machine room (56) via a second duct section (60), the first duct section and the second duct section ending in a common duct section (62) of the exhaust duct, the fan (70) being disposed in the common duct section.

9. The test chamber according to any one of claims 6 to 8,
**characterized in that**
the ventilation system (57) has an adjustment valve (72) disposed in the first duct section (59).

10. The test chamber according to any one of claims 6 to 9,
**characterized in that**
the ventilation system (57) has at least one sensor (65, 66, 67) disposed in the first duct section (59), the second duct section (60) and/or an air supply duct (61) of the ventilation system, the air supply duct being connected to the test space (55), the sensor being a flow sensor and/or a temperature sensor.

11. The test chamber according to any one of claims 6 to 10,
**characterized in that**
the test chamber (54) has a controller configured to control an exhaust air temperature in the common duct section (62) in a temperature range of -20 °C to +60 °C.

12. The test chamber according to any one of the preceding claims,
**characterized in that**
the fan (24, 51, 70) is disposed within the machine room (13, 36, 56).

13. The test chamber according to any one of the preceding claims,
**characterized in that**
the ventilation system (23, 37, 57) has an air supply duct (44, 61) connected to the test space (12, 35, 55), at least one valve being disposed both in the air supply duct and in the exhaust duct (25, 38, 58), preferably directly upstream and downstream of the test space.

14. The test chamber according to claim 13,
**characterized in that**
the valve is at least one flap (49, 50, 68, 69) operable by a difference in pressure.

15. The test chamber according to any one of the preceding claims,
**characterized in that**
the detector comprises at least one other gas sensor (43, 64) in the machine room (13, 36, 56), which is separated from the test space (12, 35, 55) in an air-tight manner.

16. The test chamber according to any one of the preceding claims,
**characterized in that**
the refrigerant is free from fluorinated hydrocarbons, is flammable and/or is a refrigerant consisting of a single substance.

17. The test chamber according to any one of the preceding claims,
**characterized in that**
the temperature control device is configured to establish a temperature in a temperature range of -80 °C to +180 °C, preferably -100 °C to +200 °C, within the test space (12, 35, 55).

18. A method for operating a test chamber (10, 34) for conditioning air, in particular a temperature control chamber, a climate chamber or the like, the test chamber having a temperature-insulated test space (12, 35), which can be sealed from an environment (33, 45) and serves to hold test material, the test space being temperature-controlled using a temperature control device of the test chamber, the temperature control device having a heating feature and a cooling feature with a cooling circuit with a refrigerant, a heat exchanger (14) in the test space, a compressor (18), a condenser (17) and an expansion member, the test chamber being provided with a machine room (13, 36) physically separated from the test space, the cooling circuit with the compressor being at least partially disposed in the machine room, the temperature control device being used to establish a temperature in a temperature range of -50 °C to +180 °C within the test space, the refrigerant being a hydrocarbon or a refrigerant mixture of hydrocarbons, refrigerant in the test space being detected using at least one gas sensor (22, 42) of a detector of a ventilation system (23, 37) of the test chamber, the gas sensor being disposed in or on the test space, a fan (24, 51) of the ventilation system being used to transport air from the test space into an exhaust duct (25, 38) of the ventilation system, the exhaust duct being connected to the test space, the fan comprising a fan motor (26) and a fan impeller (27), the fan motor being disposed in an air-tight enclosure (28, 53).

19. The method according to claim 18,
**characterized in that**
an exhaust air temperature in the exhaust duct (25, 38) approximately corresponds to the temperature within the test space (12, 35)

20. A method for operating a test chamber (54) for conditioning air, in particular a temperature control chamber, a climate chamber or the like, the test chamber having a temperature-insulated test space (55), which can be sealed from an environment (71) and serves to hold test material, the test space being temperature-controlled using a temperature control device of the test chamber, the temperature control device being used to establish a temperature in a temperature range of -50 °C to +180 °C within the test space, the temperature control device having a heating feature and a cooling feature with a cooling circuit with a refrigerant, a heat exchanger in the test space, a compressor, a condenser and an expansion member, the refrigerant being a hydrocarbon or a refrigerant mixture of hydrocarbons, the test chamber being provided with a machine room (56) physically separated from the test space, the cooling circuit with the compressor being at least partially disposed in the machine room, refrigerant in the test space being detected using at least one gas sensor (63) of a detector of a ventilation system (57) of the test chamber, the gas sensor being disposed in the test space, a fan (70) of the ventilation system being used to transport air from the machine room and the test space into an exhaust duct (58) of the ventilation system, the exhaust duct being connected to the test space and the machine room.

21. The method according to claim 19 or 20,
**characterized in that**
a controller of the test chamber (10, 34, 54) is used to operate the ventilation system (23, 37, 57) when the detector detects refrigerant.

22. The method according to any one of claims 19 to 21,
**characterized in that**
a controller of the test chamber (10, 34, 54) is used to test a function of the ventilation system (23, 37, 57) before the temperature control device is put into operation.

## Revendications

1. Chambre d'essai (10, 34) pour le conditionnement de l'air, en particulier une chambre de contrôle de la température, une chambre climatique ou similaire, la chambre d'essai comprenant un espace d'essai (12, 35), qui est isolé de la température, peut être scellé d'un environnement (33, 45) et sert à contenir des matériaux d'essai, et un dispositif de contrôle de la température pour contrôler la température de l'espace d'essai, le dispositif de contrôle de la température ayant une fonction de chauffage et une fonction de refroidissement avec un circuit de refroidissement avec un réfrigérant, un échangeur de chaleur (14) dans l'espace d'essai, un compresseur (18), un condenseur (17) et un organe d'expansion, la chambre d'essai étant pourvue d'une salle de machines (13, 36) physiquement séparée de l'espace d'essai, le circuit de refroidissement avec le compresseur étant au moins partiellement disposé dans la salle de machines, le dispositif de contrôle de la température étant configuré pour établir une température dans une plage de température de -50 °C à +180 °C à l'intérieur de l'espace d'essai, le réfrigérant étant un hydrocarbure ou un mélange réfrigérant d'hydrocarbures, la chambre d'essai comprenant un système de ventilation (23, 37) ayant un détecteur avec au moins un capteur de gaz (22, 42) dans ou sur l'espace d'essai pour détecter les réfrigérants dans l'espace d'essai, le système de ventilation comprenant un ventilateur (24, 51) et un conduit d'échappement (25, 38), le conduit d'échappement étant relié à l'espace d'essai de telle sorte que le ventilateur peut transporter l'air de l'espace d'essai dans le conduit d'échappement, le ventilateur comprend un moteur de ventilateur (26) et un rotor de ventilateur (27), le moteur de ventilateur étant disposé dans un boîtier (28, 53) étanche.

2. Chambre d'essai selon la revendication 1,
**caractérisée en ce que**
le boîtier (28, 53) est en métal ou en tôle et sépare le moteur de ventilateur (26) au moins du conduit d'échappement (25, 38), de l'espace d'essai (12, 35) et/ou de la salle de machines (13, 36) de manière étanche à l'air.

3. Chambre d'essai selon l'une quelconque des revendications précédentes,
**caractérisée en ce que**
le conduit d'échappement (25, 38) est relié à l'espace d'essai (12, 35) par une première partie de conduit (39) et à la salle de machines (13, 36) par une deuxième partie de conduit (40), le ventilateur (24, 51) étant disposé dans la première partie de conduit, un autre ventilateur (29, 52) du système de ventilation (23, 37) étant disposé dans l'autre partie de conduit.

4. Chambre d'essai selon la revendication 3,
**caractérisée en ce que**
la première partie de conduit (39) et la deuxième partie de conduit (40) se terminent à une partie de conduit (32, 41) commune du conduit d'échappement (25, 38).

5. Chambre d'essai selon la revendication 3 ou la revendication 4,
**caractérisée en ce que**
l'autre ventilateur (29, 52) est configuré pour être utilisé dans des atmosphères explosibles, en particulier conformément à la directive ATEX relative aux équipements et/ou à la directive ATEX relative aux lieux de travail en vigueur au jour de la priorité.

6. Chambre d'essai (54) pour le conditionnement de l'air, en particulier une chambre de contrôle de la température, une chambre climatique ou similaire, la chambre d'essai comprenant un espace d'essai (55), qui est isolé de la température, peut être scellé d'un environnement (71) et sert à contenir des matériaux d'essai, et un dispositif de contrôle de la température pour contrôler la température de l'espace d'essai, le dispositif de contrôle de la température étant configuré pour établir une température dans une plage de température de -50 °C à +180 °C à l'intérieur de l'espace d'essai, le dispositif de contrôle de la température ayant une fonction de chauffage et une fonction de refroidissement avec un circuit de refroidissement avec un réfrigérant, un échangeur de chaleur dans l'espace d'essai, un compresseur, un condenseur et un organe d'expansion, le réfrigérant étant un hydrocarbure ou un mélange réfrigérant d'hydrocarbures, la chambre d'essai étant pourvue d'une salle de machines (56) physiquement séparée de l'espace d'essai, le circuit de refroidissement avec le compresseur étant au moins partiellement disposé dans la salle de machines, la chambre d'essai comprenant un système de ventilation (57) ayant un détecteur avec au moins un capteur de gaz (63) dans l'espace d'essai pour détecter les réfrigérants dans l'espace d'essai, le système de ventilation comprenant un ventilateur (70) et un conduit d'échappement (58), le conduit d'échappement étant relié à l'espace d'essai et à la salle de machines de telle sorte que l'un ventilateur peut transporter l'air de la salle de machines et de l'espace d'essai dans le conduit d'échappement.

7. Chambre d'essai selon la revendication 6,
**caractérisée en ce que**
le ventilateur (70) est configuré pour être utilisé dans des atmosphères explosibles, en particulier conformément à la directive ATEX relative aux équipements et/ou à la directive ATEX relative aux lieux de travail en vigueur au jour de la priorité.

8. Chambre d'essai selon la revendication 6 ou la revendication 7,
**caractérisée en ce que**
le conduit d'échappement (58) est relié à l'espace d'essai (55) par une première partie de conduit (59) et à la salle de machines (56) par une deuxième partie de conduit (60), la première partie de conduit et la deuxième partie de conduit se terminant à une partie de conduit (62) commune du conduit d'échappement, le ventilateur (70) étant disposé dans la partie de conduit commune.

9. Chambre d'essai selon l'une quelconque des revendications 6 à 8,
**caractérisée en ce que**
le système de ventilation (57) a une vanne de réglage (72) disposée dans la première partie de conduit (59).

10. Chambre d'essai selon l'une quelconque des revendications 6 à 9,
**caractérisée en ce que**
le système de ventilation (57) a au moins un capteur (65, 66, 67) disposé dans la première partie de conduit (59), la deuxième partie de conduit (60) et/ou un conduit d'alimentation en air (61) du système de ventilation, le conduit d'alimentation en air étant relié à l'espace d'essai (55), le capteur étant un capteur d'écoulement et/ou un capteur de température.

11. Chambre d'essai selon l'une quelconque des revendications 6 à 10,
**caractérisée en ce que**
la chambre d'essai (54) a un contrôleur configuré pour réguler la température de l'air évacué dans la partie de conduit (62) commune dans une plage de température entre -20 °C et +60 °C.

12. Chambre d'essai selon l'une quelconque des revendications précédentes,
**caractérisée en ce que**
le ventilateur (24, 51, 70) est disposé à l'intérieur de la salle de machines (13, 36, 56).

13. Chambre d'essai selon l'une quelconque des revendications précédentes,
**caractérisée en ce que**
le système de ventilation (23, 37, 57) a un conduit d'alimentation en air (44, 61) relié à l'espace d'essai (12, 35, 55), au moins une vanne étant disposée à la fois dans le conduit d'alimentation en air et dans le conduit d'échappement (25, 38, 58), de préférence directement en amont et en aval de l'espace d'essai.

14. Chambre d'essai selon la revendication 13,
**caractérisée en ce que**
la soupape est constituée d'au moins un clapet (49, 50, 68, 69) actionnable par une différence de pression.

15. Chambre d'essai selon l'une quelconque des revendications précédentes,
**caractérisée en ce que**
le détecteur comprend au moins un autre capteur de gaz (43, 64) dans la salle de machines (13, 36, 56), qui est séparée de l'espace d'essai (12, 35, 55) de manière étanche.

16. Chambre d'essai selon l'une quelconque des revendications précédentes,
**caractérisée en ce que**
le réfrigérant est sans hydrocarbures fluorés, est inflammable et/ou est un réfrigérant constitué d'une seule substance.

17. Chambre d'essai selon l'une quelconque des revendications précédentes,
**caractérisée en ce que**
le dispositif de contrôle de la température est configuré pour établir une température dans une plage de température de -80 °C à +180 °C, de préférence de -100 °C à +200 °C, à l'intérieur de l'espace d'essai (12, 35, 55).

18. Procédé de fonctionnement d'une chambre d'essai (10, 34) pour le conditionnement de l'air, en particulier une chambre de contrôle de la température, une chambre climatique ou similaire, la chambre d'essai comprenant un espace d'essai (12, 35), qui est isolé de la température, peut être scellé d'un environnement (33, 45) et sert à contenir des matériaux d'essai, l'espace d'essai étant régulé en température à l'aide d'un dispositif de contrôle de la température de la chambre d'essai, le dispositif de contrôle de la température ayant une fonction de chauffage et une fonction de refroidissement avec un circuit de refroidissement avec un réfrigérant, un échangeur de chaleur (14) dans l'espace d'essai, un compresseur (18), un condenseur (17) et un organe d'expansion, la chambre d'essai étant pourvue d'une salle de machines (13, 36) physiquement séparée de l'espace d'essai, le circuit de refroidissement avec le compresseur étant au moins partiellement disposé dans la salle de machines, le dispositif de contrôle de la température étant configuré pour établir une température dans une plage de température de -50 °C à +180 °C à l'intérieur de l'espace d'essai, le réfrigérant étant un hydrocarbure ou un mélange réfrigérant d'hydrocarbures, le réfrigérant dans l'espace d'essai étant détecté à l'aide d'au moins un capteur de gaz (22, 42) d'un détecteur d'un système de ventilation (23, 37) de la chambre d'essai, le capteur de gaz étant disposé dans ou sur l'espace d'essai, un ventilateur (24, 51) du système de ventilation étant utilisé pour transporter l'air de l'espace d'essai dans un conduit d'échappement (25, 38) du système de ventilation, le conduit d'échappement étant relié à l'espace d'essai, le ventilateur comprenant un moteur de ventilateur (26) et un rotor de ventilateur (27), le moteur de ventilateur étant disposé dans un boîtier étanche à l'air (28, 53).

19. Procédé selon la revendication 18,
**caractérisée en ce que**
la température de l'air d'échappement dans le conduit d'échappement (25, 38) correspond approximativement à la température à l'intérieur de l'espace d'essai (12, 35)

20. Procédé de fonctionnement d'une chambre d'essai (54) pour le conditionnement de l'air, en particulier une chambre de contrôle de la température, une chambre climatique ou similaire, la chambre d'essai comprenant un espace d'essai (55), qui est isolé de la température, peut être scellé d'un environnement (71) et sert à contenir des matériaux d'essai, l'espace d'essai étant régulé en température à l'aide d'un dispositif de contrôle de la température de la chambre d'essai, le dispositif de contrôle de la température étant configuré pour établir une température dans une plage de température de -50 °C à +180 °C à l'intérieur de l'espace d'essai, le dispositif de contrôle de la température ayant une fonction de chauffage et une fonction de refroidissement avec un circuit de refroidissement avec un réfrigérant, un échangeur de chaleur dans l'espace d'essai, un compresseur, un condenseur et un organe d'expansion, le réfrigérant étant un hydrocarbure ou un mélange réfrigérant d'hydrocarbures, la chambre d'essai étant pourvue d'une salle de machines (56) physiquement séparée de l'espace d'essai, le circuit de refroidissement avec le compresseur étant au moins partiellement disposé dans la salle de machines, le réfrigérant dans l'espace d'essai étant détecté à l'aide d'au moins un capteur de gaz (63) d'un détecteur d'un système de ventilation (57) de la chambre d'essai, le capteur de gaz étant disposé dans l'espace d'essai, un ventilateur (70) du système de ventilation étant utilisé pour transporter l'air de de la salle de machines et de l'espace d'essai dans un conduit d'échappement (58) du système de ventilation, le conduit d'échappement étant relié à l'espace d'essai.

21. Procédé selon la revendication 19 ou la revendication 20,
**caractérisée en ce**
**qu'**un contrôleur de la chambre d'essai (10, 34, 54) est utilisé pour faire fonctionner le système de ventilation (23, 37, 57) lorsque le détecteur détecte un réfrigérant.

22. Procédé selon l'une quelconque des revendications 19 à 21,
**caractérisée en ce**
**qu'**un contrôleur de la chambre d'essai (10, 34, 54) est utilisé pour tester une fonction du système de ventilation (23, 37, 57) avant que le dispositif de contrôle de la température ne soit mis en service.
